# EUROPEAN PATENT SPECIFICATION

(11) **EP 1 344 888 B1**
(45) Date of publication and mention of the grant of the patent: **16.11.2011**
(21) Application number: 03075701.7
(22) Date of filing: 11.03.2003
(51) Int. Cl.: E06B 3/54

(54) **Support element for a pane or for a panel of a fixture frame**
Stützelement für eine Scheibe oder ein Paneel in einem Rahmen
Elément de support pour une vitre ou un panneau dans un encadrement

(30) Priority: 15.03.2002 IT MI20020556
(43) Date of publication of application: 17.09.2003
(73) Proprietor: HYDRO BUILDING SYSTEMS S.p.A., 20063 Cernusco sul Naviglio (MI) (IT)
(72) Inventor: Zanoni, Edoardo, 20124 Milano (IT)
(74) Representative: Colombo, Stefano Paolo

(56) References cited:
- EP-A- 0 225 473
- DE-A- 3 435 241
- DE-U- 29 509 133
- FR-A- 2 269 841
- GB-A- 2 323 116
- US-A- 2 638 191

## Description

The present invention relates to a support element for a pane or for a panel of a fixture frame. For example, the frame of a window or a French window.

Building fixtures, such as windows, doors and the like, comprising frames formed by metal sections, are known.

Some frames are made using load-bearing sections in which a pane or a panel is fixed by means of plugs and spring members. The plugs allow positioning of the pane in the plane of the frame and the spring members perform the function of connecting the pane to the frame. They directly connect the pane to the load-bearing section. During assembly of the fixture it may be required to remove some of the spring members, for example in order to adjust the evenness of the pane with respect to the frame. In this case, a tool, such as a screwdriver, is used, said tool being inserted between each spring member and the pane. This type of operation requires a great deal of care and sometimes results in damage to the pane.

Moreover, when thermally cut fixtures are used, there is the drawback that the spring member, since it makes contact with the metal elements of the load-bearing section, acts as a heat conductor and negatively affects the thermal insulation between the exterior and the interior.

The main object of the present invention is to avoid the abovementioned drawbacks of the known embodiments.

FR 2 269 841 discloses a retaining device for keeping a glass in a fixed position in a window or a door. The device comprises a support element and a lateral element, the support and lateral elements being engageable one with each other. The support element has projections slidingly engageable with a frame profile.

DE 295 09 133 U discloses a device for supporting a glass. The glass is blocked by a pair of gaskets arranged in, and projecting from, opposite end parts of the metal profile. This does not allow to place the glass after having assembled a door/window frame because the glass should "penetrate" the profile.

DE 34 35 241 A1 relates to an arrangement for keeping a glass in a proper position. The arrangement comprises a resilient S-shaped clip. A first bottom end of the clip is connected to a pin connected to the frame. The second end of the clip resiliently urges directly against the glass. A proper tool, cooperating with a hole in the clip and the connection pin, is provided for forcing the clip away from the glass.

A first object of the present invention is to provide a support element that can be easily mounted to the load-bearing section without performing labourious and time consuming procedures and avoiding the use of screws or the like.

Furthermore, a second object of the present invention is to provide a support element that is not free to slide in the frame profile and thus can be used also in vertical arranged profiles.

Furthermore, a third object of the present invention is to provide a resilient element, engageable with the support element, that can be separated therefrom.

Furthermore, a forth object of the present invention is to avoid that the resilient element urges against the pane or panel and damages it.

Furthermore, a fifth object of the present invention is to avoid the use of glues or the like for fixing the pane or panel.

Furthermore, a sixth object of the present invention is to provide a resilient element that is completely removable from the support element through the use of a commonly available tool, for instance a screwdriver or the like.

These objects are obtained by an assembly according to claim 1 and a fixture frame according fo claim 14. Further advantageous features of the present invention are set forth in the corresponding dependent claims. All the claims are deemed to be regarded as being supported by the present description.

According to a first aspect, the present invention consists in an assembly as described in detail in claim 1.

According to the invention as described in claim 1, a resilient element for a pane or for a panel of a frame of a fixture is provided, said resilient element being made of steel and separable from the support element and comprising: a resilient lamina having a first bent-back end, a substantially flat portion, and a curved portion, characterized in that it further comprises a second bent-back end, wherein said first bent-back end can be removably engaged with the support element and said second bent-back end can be engaged with said pane or panel so as to exert a pressure thereon.

Preferably, said second connection means comprise a locating wall onto which said resilient element can be hooked.

Advantageously, said support element is provided with a recess and said locating wall forms part of said recess.

Advantageously, said support element is also provided with third connection means which can be engaged with said load-bearing section.

Preferably, said third connection means consist of a base-piece able to engage with a second cavity of said load-bearing section.

Advantageously, said support element is further provided with centring teeth able to engage with said first cavity of said load-bearing section.

Typically, said support element consists of a plate provided with said first connection means and said second connection means.

Preferably, said plate also has a seat able to house said resilient element, said seat being is situated on an opposite side to that of said pane or panel.

Typically, said first bent-back end forms an acute angle at the point of connection with said substantially flat portion.

In turn, said curved portion is inclined at an acute angle with respect to said substantially flat portion.

Preferably, said second bent-back end forms an obtuse angle at the point of connection with said curved portion.

Advantageously, said resilient lamina has a hole with which a tool can be engaged.

Preferably, a strip of elastomer material is arranged in between said second bent-back end of said resilient lamina and said pane or panel.

A further aspect of the invention consists in a fixture frame as described in detail in claim 14.

The support element and the resilient element of the invention allow mounting of the pane or the panel in the load-bearing section of the frame and adjustment of its position in a simple, rapid and reliable manner.

In particular, a plurality of support elements is coupled with the load-bearing section and the pane or the panel is mounted between them, arranging it so that it is centred and coplanar with respect to the frame. Then, the pane or the panel is locked with respect to the support elements by means of a plurality of resilient elements, each of which engages with the pane, or the panel, and is hooked onto a respective support element.

If, after assembly, the pane or panel is not perfectly square with respect to the frame, the resilient elements may be removed, by acting on them with a tool without interfering with the pane or panel which thus do not risk being damaged.

Moreover, the resilient element makes contact with the support element and not with the section of the frame such that the frame remains thermally insulated with respect to the external environment.

Characteristic features and advantages of the invention will now be illustrated with reference to an embodiment shown by way of a nonlimiting example in the accompanying drawings in which:
Fig. 1 is a partial cross-sectional view of a window constructed with a support element for a pane or a panel in a frame, provided in accordance with the invention;
Figs. 2-5 are respectively front, rear, top plan and left-hand side views of the support element according to Fig. 1;
Fig. 6 is a sectional view along the plane indicated by the line VI-VI in Fig. 2;
Fig. 7 is a sectional view along the plane indicated by the line VII-VII in Fig. 2;
Fig. 8 is a perspective view of a resilient element coupled with the support element according to Fig. 1;
Fig. 9 is a left-hand side view of the resilient element according to Fig. 8;
Figs. 10-15 show sequences of assembly of the window according to Fig. 1.

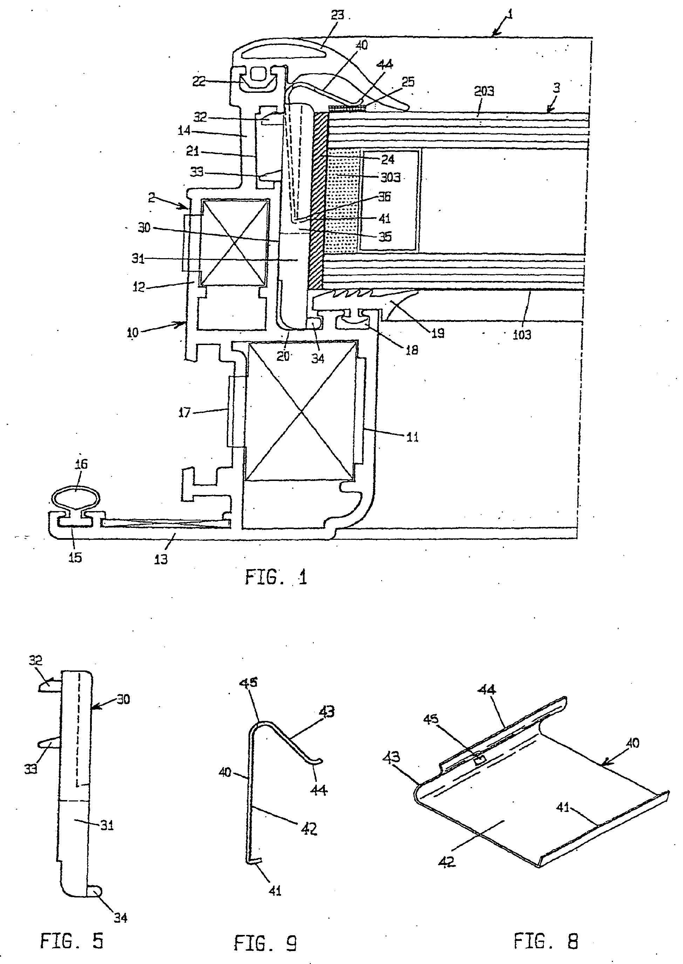

Fig. 1 shows a window 1 having a movable frame 2 and a pane 3, of the type comprising a sealed cavity glass unit, with an inner side 103, an outer side 203 and an edge 303. The figure does not show a fixed frame in which the movable frame 2 is hingeably mounted. The movable frame 2 comprises a load-bearing section 10 which consists of two tubular parts 11 and 12, a bearing flange 13 and a longitudinal rib 14 which are formed as one piece.

The flange 13 is provided with a C-shaped channel-like seat 15 for a seal 16. The tubular part 11 has a C-shaped cavity 17 for a component of a hinge - not shown - which connects the movable frame 2 to the fixed frame. The tubular part 11 also has a C-shaped channel-like seat 18 for a seal 19 and a longitudinal hollow 20, the function of which will be illustrated further below. The seal 19 makes contact with the inner side 103 of the pane 3.

The longitudinal rib 14 has a C-shaped cavity 21, the function of which will be illustrated further below, and a C-shaped channel-like seat 22 for a covering seal 23 which makes contact with the outer side 203 of the pane 3.

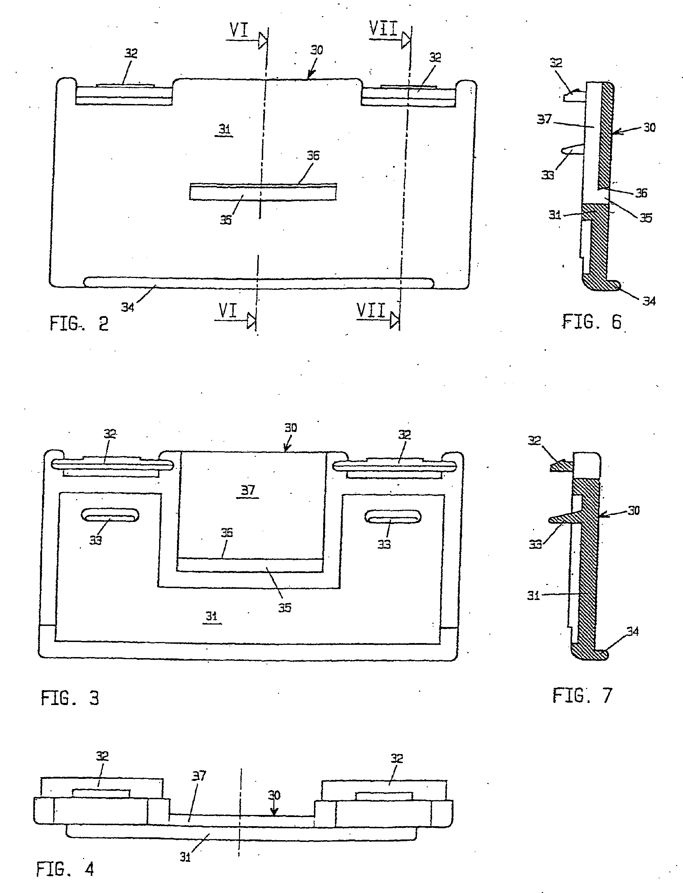

A support element 30 for the pane 3 is mounted inside the load-bearing section 10. The support element 30 is formed by a plate 31 (Figs. 2-7) from which two hooks 32 and two centring teeth 33 project, being inserted into the cavity 21 of the rib 14, and a base-piece 34 which is inserted into the hollow 20 of the tubular part 11. The plate 31 has a slot 35 provided with an inclined wall 36 which acts as locating surface for a resilient element 40, as will be illustrated further below. The plate 31 has a seat 37 inside which the resilient element 40 is housed. The seat 37 is situated on the opposite side to the pane 3. The support element 30 is fixed to the load-bearing section 10 by means of the hooks 32 and the base-piece 34 which are inserted, respectively, into the cavity 21 and into the hollow 20 and is centred with respect to the section 10 by means of the centring teeth 33, which are also inserted into the hollow 21 (Fig. 1).

The load-bearing section 10 is made of metal, for example, aluminium alloy.

The support element 30 is made of plastic, for example nylon. The seals 16, 19 and 23 are made of elastomer material.

A pane spacer plug 24 is arranged between the plate 31 of the support element 30 and the edge 303 of the pane 3.

A resilient element 40 is coupled with the support element 30 (Figs. 8 and 9) . The resilient element 40 consists of a resilient lamina which has a first bent-back end 41, a substantially flat portion 42, a curved portion 43 and a second bent-back end 44. The bent-back end 41 forms an acute angle at the point of connection with the substantially flat portion 42. In turn, the curved portion 43 is inclined at an acute angle with respect to the substantially flat portion 42. The bent-back end 44 forms an obtuse angle at the point of connection with the curved portion 43. The resilient element 40 has a hole 45 inside which it is possible engage a tool, such as a screwdriver.

The resilient element 40 is housed inside the seat 37 of the support element 30 and rests thereon on the opposite side to that of the pane 3. The resilient element 40 is coupled with the support element 30 by means of a first bent-back end 41 which hooks onto the locating wall 36 of the slot 35 (Fig. 1). In this way the resilient element 40 exerts a pressure on the outer side 203 of the pane 3 and fixes the pane to the assembly consisting of the support element 30 and the load-bearing section 10.

The resilient element 40 is made of steel, for example C72 steel or AISI 300 stainless steel.

The outer side 203 of the pane 3 has, applied to it, a strip 25 of elastomer material on which the second bent-back end 44 of the resilient element 40 rests.

The frame 2 ensures the maximum degree of thermal insulation because the resilient element 40 is in contact with the support element 30 and thus remains separated from the metal of the section 10.

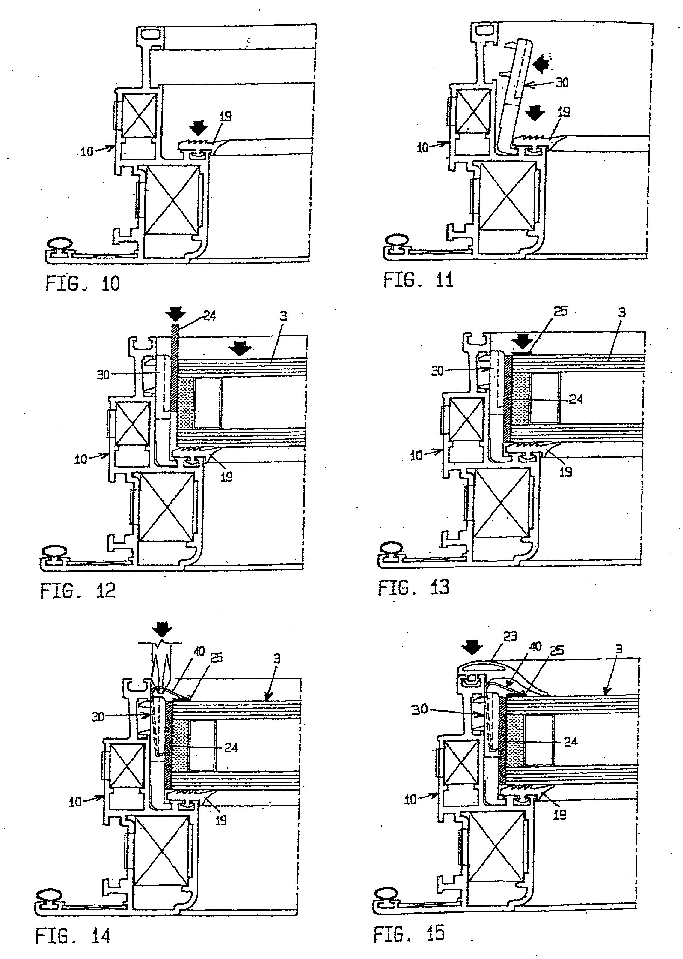

The sequence for assembly of the pane 3 in the load-bearing structure 10 of the frame 2 starts with insertion of the seal 19 into the seat 18 of the tubular part 11 (Fig. 10). A prechosen number of support elements 30 are then fixed to the load-bearing section 10 (Fig. 11) by means of insertion of the hooks 32 and the centring teeth 33 into the cavity 21 and the base-piece 34 into the hollow 20. For example, the support elements 30 are spaced at an interval of about 30 cm. Then the pane 3 is positioned in the load-bearing section 10 (Fig. 12), arranging the insert 24 between it and the support elements 30. Following which, the strip 25 is applied to the pane 25 (Fig. 13) and a resilient element 40 is mounted in each support element 30 (Fig. 14). Each resilient element 40 is inserted between the respective support element 30 and the rib 14 by means of a tool, such as a Philips screwdriver, which engages with the hole 45 and pushes the resilient element 40 such that its first bent-back end 41 hooks onto the locating wall 36 of the slot 35 and its second bent-back end 44 comes into contact with the strip 25, exerting a pressure on the pane 3. Finally, the seal 23 is inserted in the seat 22 of the rib 14 so as to cover the resilient element 40 and make contact with the outer side 203 of the pane 3 (Fig. 15).

Where necessary, in order to detach the resilient element 40 from the support element 30, it is sufficient to introduce a small screwdriver into the hole 45 of the resilient element 40, insert it between the resilient element 40 and the support element 30 and push it against the bent-back end 41 until the latter is released from the locating wall 36 of the support element 30.

## Claims

1. An assembly comprising a support element (30) for supporting a pane (3) or a panel of a frame (2) of a fixture (1) and a resilient element (40),
wherein said support element (30) is made of plastic and is provided with first connection means (32) which can be engaged with a load-bearing section (10) of the fixture (1) and second connection means (36) which can be engaged with said resilient element (40),
wherein said first connection means (32) consist of projections (32) able to engage with a first cavity (21) of said load-bearing section (10),
wherein said resilient element (40) is made of steel and is separable from the support element (30),
wherein said resilient element (40) comprises a resilient lamina (40) having a first bent-back end (41), a substantially flat portion (42), a curved portion (43) and a second bent-back end (44), and
wherein said first bent-back end (41) can be removably engaged with said support element (30) and said second bent-back end (44) can be engaged with said pane (3) or panel so as to exert a pressure thereon.

2. The assembly according to Claim 1, **characterized in that** said second connection means (36) comprise a locating wall (36) onto which said resilient element (40) can be hooked.

3. The assembly according to Claim 2, **characterized in that** the support element (30) is provided with a recess (35), said locating wall (36) forming part of said recess (35).

4. The assembly according to Claim 1, **characterized in that** the support element (30) is also provided with third connection means (34) which can be engaged with said load-bearing section (10).

5. The assembly according to Claim 4, **characterized in that** said third connection means (34) consist of a base-piece able to engage with a second cavity (20) of said load-bearing section (10).

6. The assembly according to any of Claims 1-5, **characterized in that** the support element (30) is further provided with centring teeth (33) able to engage with said first cavity (21) of said load-bearing section (10).

7. The assembly according to any of Claims 1-6, **characterized in that** the support element (30) consists of a plate (31) provided with said first connection means (32) and said second connection means (36).

8. The assembly according to Claim 7, **characterized in that** said plate (31) also has a seat (37) able to house said resilient element (40), said seat (37) being situated on an opposite side to that of said pane (3) or panel.

9. The assembly according to Claim 1, **characterized in that** said first bent-back end (41) forms an acute angle at the point of connection with said substantially flat portion (42).

10. The assembly according to Claim 1, **characterized in that** said curved portion is inclined (43) at an acute angle with respect to said substantially flat portion (42).

11. The assembly according to Claim 1, **characterized in that** said second bent-back end (44) forms an obtuse angle at the point of connection with said curved portion (43).

12. The assembly according to Claim 1, **characterized in that** said resilient lamina (40) has a hole (45) with which a tool can be engaged.

13. The assembly according to Claim 9, **characterized in that** a strip of elastomer material (25) is arranged in between said second bent-back end (44) of said resilient lamina (40) and said pane (3) or panel.

14. A fixture frame comprising an assembly of any of claims 1 to 13 and a load-bearing section (10).

15. A fixture frame according to claim 14, wherein said load-bearing section (10) is made of metal.

## Patentansprüche

1. Eine Anordnung mit einem Stützelement (30) zum Stützen einer Scheibe (3) oder eines Paneels von einem Rahmen (2) einer Vorrichtung (1) und mit einem elastischen Element (40),
wobei das besagte Stützelement (30) mit Plastik hergestellt ist und mit ersten Verbindungsmitteln (32), welche mit einem lasttragenden Bereich (10) der Vorrichtung (1) eingreifen können, und mit zweiten Verbindungsmitteln (36), welche mit dem besagten elastischen Element (40) eingreifen können, ausgestattet ist, wobei die besagten ersten Verbindungsmittel (32) aus Vorsprüngen (32) bestehen, welche dazu ausgebildet sind, mit einer ersten Ausnehmung (21) des besagten lasttragenden Bereichs (10) einzugreifen,
wobei das besagte elastische Element (40) mit Stahl hergestellt ist und von dem Stützelement (30) trennbar ist,
wobei das besagte elastische Element (40) ein elastisches Blättchen (40) aufweist, welches ein erstes zurückgebogenes Ende (41), einen im Wesentlichen ebenen Abschnitt (42), einen gebogenen Abschnitt (43) und ein zweites zurückgebogenes Ende (44) aufweist, und
wobei das besagte erste zurückgebogene Ende (41) lösbar mit dem besagten Stützelement (30) in Eingriff gebracht werden kann und das besagte zweite zurückgebogene Ende (44) mit der besagten Scheibe (3) oder dem besagten Paneel in Eingriff gebracht werden kann, so dass es darauf einen Druck ausübt.

2. Die Anordnung nach Anspruch 1,
**dadurch gekennzeichnet,**
**dass** die besagten zweiten Verbindungsmittel (36) eine Fixierwand (36) aufweisen, an welche das besagte elastische Element (40) gehakt werden kann.

3. Die Anordnung nach Anspruch 2,
**dadurch gekennzeichnet,**
**dass** das Stützelement (30) mit einer Vertiefung (35) versehen ist,
wobei die besagte Fixierwand (36) einen Teil der besagten Vertiefung (35) bildet.

4. Die Anordnung nach Anspruch 1,
**dadurch gekennzeichnet,**
**dass** das Stützelement (30) außerdem mit dritten Verbindungsmitteln (34) versehen ist, welche mit dem besagten lasttragenden Bereich (10) in Eingriff gebracht werden können.

5. Die Anordnung nach Anspruch 4,
**dadurch gekennzeichnet,**
**dass** die besagten dritten Verbindungsmittel (34) aus einem Basisstück bestehen, welches dazu ausgebildet ist, mit einer zweiten Ausnehmung (20) von dem besagten lasttragenden Bereich (10) einzugreifen.

6. Die Anordnung nach einem der Ansprüche 1 bis 5,
**dadurch gekennzeichnet,**
**dass** das Stützelement (30) außerdem mit Zentrierzähnen (33) versehen ist, welche dazu ausgebildet sind, mit der besagten ersten Ausnehmung (21) des besagten lasttragenden Bereichs (10) einzugreifen.

7. Die Anordnung nach einem der Ansprüche 1 bis 6,
**dadurch gekennzeichnet,**
**dass** das Stützelement (30) aus einer Platte (31) besteht, welche mit den besagten ersten Verbindungsmitteln (32) und mit den besagten zweiten Verbindungsmitteln (36) versehen ist.

8. Die Anordnung nach Anspruch 7,
**dadurch gekennzeichnet,**
**dass** die besagte Platte (31) außerdem einen Sitz (37) aufweist, welcher dazu ausgebildet ist, das besagte elastische Element (40) aufzunehmen, wobei der besagte Sitz (37) an einer gegenüberliegenden Seite zu dem der besagten Scheibe (3) oder des besagten Paneels angeordnet ist.

9. Die Anordnung nach Anspruch 1,
**dadurch gekennzeichnet,**
**dass** das besagte erste zurückgebogene Ende (41) an der Verbindungsstelle zu dem besagten im Wesentlichen ebenen Abschnitt (42) einen spitzen Winkel bildet.

10. Die Anordnung nach Anspruch 1,
**dadurch gekennzeichnet,**
**dass** der besagte gebogene Abschnitt gegenüber dem besagten im Wesentlichen ebenen Abschnitt (42) in einem spitzen Winkel geneigt (43) ist.

11. Die Anordnung nach Anspruch 1,
**dadurch gekennzeichnet,**
**dass** das besagte zweite zurückgebogene Ende (44) an der Verbindungsstelle zu dem besagten gebogenen Abschnitt (43) einen stumpfen Winkel bildet.

12. Die Anordnung nach Anspruch 1,
**dadurch gekennzeichnet,**
**dass** das besagte elastische Blättchen (40) ein Loch (45) hat, in welches ein Werkzeug eingreifen kann.

13. Die Anordnung nach Anspruch 9,
**dadurch gekennzeichnet,**
**dass** ein Streifen eines elastomeren Materials (25) zwischen dem besagten zweiten zurückgebogenen Ende (44) des besagten elastischen Blättchens (40) und der besagten Scheibe (3) oder dem besagten Paneel angeordnet ist.

14. Eine Rahmenvorrichtung mit einer Anordnung nach einem der Ansprüche 1 bis 13 und mit einem lasttragenden Bereich (10).

15. Eine Rahmenvorrichtung nach Anspruch 14,
wobei der besagte lasttragende Bereich (10) mit Metall hergestellt ist.

## Revendications

1. Ensemble comprenant un élément de support (30) pour supporter une vitre (3) ou un panneau d'un cadre (2) d'une installation fixe (1) et un élément élastique (40),
dans lequel ledit élément de support (30) est réalisé à partir de plastique et est doté de premiers moyens de raccordement (32) qui peuvent être mis en prise avec une section de support de charge (10) de l'installation fixe (1) et de deuxièmes moyens de raccordement (36) qui peuvent être mis en prise avec ledit élément élastique (40),
dans lequel lesdits premiers moyens de raccordement (32) se composent de saillies (32) pouvant se mettre en prise avec une première cavité (21) de ladite section de support de charge (10),
dans lequel ledit élément élastique (40) est réalisé à partir d'acier et est séparable de l'élément de support (30),
dans lequel ledit élément élastique (40) comprend une lamelle élastique (40) ayant une première extrémité arrière pliée (41), une partie sensiblement plate (42), une partie incurvée (43) et une deuxième extrémité arrière pliée (44), et
dans lequel ladite première extrémité arrière pliée (41) peut être mise en prise de manière amovible avec ledit élément de support (30) et ladite deuxième extrémité arrière pliée (44) peut être mise en prise avec ladite vitre (3) ou panneau afin d'exercer une pression sur cette (ce) dernière (dernier).

2. Ensemble selon la revendication 1, **caractérisé en ce que** lesdits deuxièmes moyens de raccordement (36) comprennent une paroi de positionnement (36) sur laquelle ledit élément élastique (40) peut être accroché.

3. Ensemble selon la revendication 2, **caractérisé en ce que** l'élément de support (30) est doté d'un évidement (35), ladite paroi de positionnement (36) faisant partie dudit évidement (35).

4. Ensemble selon la revendication 1, **caractérisé en ce que** l'élément de support (30) est également doté de troisièmes moyens de raccordement (34) qui peuvent être mis en prise avec ladite section de support de charge (10).

5. Ensemble selon la revendication 4, **caractérisé en ce que** lesdits troisièmes moyens de raccordement (34) se composent d'une pièce de base pouvant se mettre en prise avec une deuxième cavité (20) de ladite section de support de charge (10).

6. Ensemble selon l'une quelconque des revendications 1 à 5, **caractérisé en ce que** l'élément de support (30) est en outre doté de dents de centrage (33) pouvant se mettre en prise avec ladite première cavité (21) de ladite section de support de charge (10).

7. Ensemble selon l'une quelconque des revendications 1 à 6, **caractérisé en ce que** l'élément de support (30) se compose d'une plaque (31) dotée desdits premiers moyens de raccordement (32) et desdits deuxièmes moyens de raccordement (36).

8. Ensemble selon la revendication 7, **caractérisé en ce que** ladite plaque (31) a également un siège (37) pouvant loger ledit élément élastique (40), ledit siège (37) étant positionné sur un côté opposé à celui de ladite vitre (3) ou panneau.

9. Ensemble selon la revendication 1, **caractérisé en ce que** ladite première extrémité arrière pliée (41) forme un angle aigu au point de raccordement avec ladite partie sensiblement plate (42).

10. Ensemble selon la revendication 1, **caractérisé en ce que** ladite partie incurvée est inclinée (43) selon un angle aigu par rapport à ladite partie sensiblement plate (42).

11. Ensemble selon la revendication 1, **caractérisé en ce que** ladite deuxième extrémité arrière pliée (44) forme un angle obtus au point de raccordement avec ladite partie incurvée (43).

12. Ensemble selon la revendication 1, **caractérisé en ce que** ladite lamelle élastique (40) a un trou (45) avec lequel un outil peut être mis en prise.

13. Ensemble selon la revendication 9, **caractérisé en ce qu'**une bande de matériau élastomère (25) est agencée entre ladite deuxième extrémité arrière pliée (44) de ladite lamelle élastique (40) et ladite vitre (3) ou panneau.

14. Cadre d'installation fixe comprenant un ensemble selon l'une quelconque des revendications 1 à 13 et une section de support de charge (10).

15. Cadre d'installation fixe selon la revendication 14, dans lequel ladite section de support de charge (10) est réalisée à partir de métal.
